(19) Europäisches Patentamt
European Patent Office
Office européen des brevets

(11) **EP 3 180 479 B1**

(12) **FASCICULE DE BREVET EUROPEEN**

(45) Date de publication et mention
de la délivrance du brevet:
**03.10.2018 Bulletin 2018/40**

(21) Numéro de dépôt: **15750394.7**

(22) Date de dépôt: **10.08.2015**

(51) Int Cl.:
***E03F 3/06*** (2006.01)

(86) Numéro de dépôt international:
**PCT/EP2015/068384**

(87) Numéro de publication internationale:
**WO 2016/023867 (18.02.2016 Gazette 2016/07)**

(54) **PROCÉDÉ DE RÉNOVATION D'UN ÉGOUT**

VERFAHREN ZUR SANIERUNG EINES ABWASSERKANALS

METHOD FOR RENOVATING A SEWER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.08.2014  BE 201400616**

(43) Date de publication de la demande:
**21.06.2017  Bulletin 2017/25**

(73) Titulaire: **Vivaqua
1000 Bruxelles (BE)**

(72) Inventeur: **BROERS, Olivier
B-1000 Bruxelles (BE)**

(74) Mandataire: **Gevers Patents
Intellectual Property House
Holidaystraat 5
1831 Diegem (BE)**

(56) Documents cités:
**WO-A1-2013/005161      DE-A1- 19 719 311
DE-U1-202004 018 084**

## Description

La présente invention concerne un procédé de rénovation d'une canalisation d'égout présentant au moins un premier tronçon de conduit d'écoulement d'eau, ledit procédé comprenant les étapes suivantes:

- une étape d'introduction d'au moins un échangeur de chaleur dans la canalisation d'égout et dans le prolongement dudit premier tronçon de conduit de façon à ce que ledit au moins un échangeur de chaleur se trouve, au moins en partie, dans un flux d'écoulement d'eau dans un conduit d'écoulement d'eau, ledit conduit d'écoulement d'eau étant formé par ledit au moins un échangeur de chaleur et ledit au moins un premier tronçon de conduit d'écoulement ;
- une étape de fixation dudit au moins un échangeur de chaleur à ladite canalisation d'égout de façon à former un espace annulaire entre une première surface de paroi interne de la canalisation et une deuxième surface de paroi externe dudit au moins un échangeur de chaleur, ledit échangeur de chaleur formant alors un coffrage perdu entre ladite première surface de paroi interne de la canalisation et une deuxième surface de paroi externe dudit au moins un échangeur de chaleur ; et
- une première étape de comblement dudit espace annulaire à l'aide d'un mortier, de préférence sans retrait.

Par les termes « coffrage perdu », on entend, au sens de la présente invention, un élément qui, une fois fixé, reste en place et entre lequel ou derrière lequel est mis en place (par exemple par coulage) un matériau de comblement ou de remplissage comme par exemple un mortier ou un béton.

Dans le cadre énergétique actuel, il existe une demande croissante de pouvoir disposer de nouveaux moyens de récupération d'énergie dont l'installation est rentable. La présente invention s'inscrit dans cette problématique en proposant de tirer profit, par exemple dans le cadre d'une campagne de modernisation des canalisations d'égout préexistantes, du procédé de rénovation d'égout susmentionné pour installer dans les canalisations d'égout à rénover un moyen de récupération d'énergie disponible dans ces dernières, l'objectif étant, suite à ladite rénovation, de pouvoir connecter aisément une pompe à chaleur (par exemple une pompe à chaleur d'une nouvelle habitation non existante lors de la rénovation de la canalisation d'égout) sur ledit échangeur de chaleur en n'importe quel endroit le long de la canalisation d'égout.

Le document DE19719311 divulgue un procédé de mise en place d'un échangeur de chaleur dans une canalisation d'égout. Lors de cette mise en place, l'échangeur de chaleur est introduit dans la canalisation d'égout de telle sorte que sa face supérieure, formée par une plaque en acier inoxydable de quelques millimètres d'épaisseur (4 mm), soit en contact direct avec les eaux usées. Plus particulièrement, selon ce document antérieur, l'échangeur de chaleur présente une forme convexe et est constitué de deux plaques en acier inoxydable reliées entre elles par des points de soudure de telle sorte à former de petites cavités d'une hauteur inférieure à 20 mm dans lesquelles circule un fluide caloporteur.

Un tel échangeur de chaleur constitué de deux plaques en acier inoxydable est coûteux et donc peu adéquat dans le cadre d'un procédé de rénovation d'égout. Par ailleurs, un raccordement d'une pompe à chaleur d'une nouvelle habitation reliée à un réseau d'égout existant, dans lequel serait préalablement placé un échangeur de chaleur selon ce document antérieur, n'est pas aisé. En effet, selon le procédé de mise en place d'un dispositif échangeur de chaleur décrit dans le document DE19719311, le raccordement d'une pompe à chaleur à l'échangeur de chaleur devrait s'effectuer via des tubes d'alimentation qui sont noyés dans un béton et qui sont localisés sous l'échangeur de chaleur. Afin d'accéder à ces tubes d'alimentation déjà mis en place et d'y connecter une pompe à chaleur, il y aurait donc lieu au moins de percer le béton, ce qui ne serait possible qu'en enlevant préalamblement les plaques formant l'échangeur de chaleur. Ceci impliquerait qu'une partie du travail effectué lors de la rénovation de la canalisation d'égout soit démoli puis reconstruit.

Le document WO2013/005161 divulgue également un procédé de mise en place d'un échangeur de chaleur dans une canalisation d'égout, ce procédé reposant sur un enrobage de tubes où circule un fluide caloporteur. Cet enrobage consiste en un béton suffisamment conducteur de chaleur dans lequel sont noyés les tubes qui, par conséquent, ne sont pas en contact direct avec les eaux usées mais bien en contact avec la paroi interne de la canalisation d'égout. A nouveau, avec le procédé de mise en place d'un dispositif échangeur de chaleur selon ce document antérieur, un raccordement d'une pompe à chaleur d'une nouvelle habitation reliée à un réseau d'égout existant, dans lequel serait préalablement placé un échangeur de chaleur selon ce document antérieur, n'est pas aisé. En effet, il conviendrait, pour pouvoir se connecter à l'échangeur de chaleur en un endroit quelconque de ce dernier, de percer le béton d'enrobage afin d'accéder aux tubes, ce qui comporte le risque d'endommager ces derniers et de causer des fuites de fluide caloporteur. En outre, ceci impliquerait également qu'une partie du travail effectué lors de la rénovation de la canalisation d'égout soit démoli puis reconstruit.

Le document DE202004018084 divulgue quant à lui un échangeur de chaleur dont les tubes sont noyés dans un béton, le béton étant lui-même recouvert par un chemisage de protection. Par conséquent, les tubes où circule un fluide caloporteur ne sont pas en contact direct avec les eaux usées mais bien en contact avec la paroi interne de la canalisation d'égout ou séparée de cette dernière par une couche de béton d'enrobage. Les mêmes problématiques que celles mentionnées ci-dessus pour le document WO2013/005161 sont donc rencontrées.

Malheureusement, les procédés de l'état de la technique ne permettent donc pas de procurer un moyen de récupération d'énergie à la fois peu onéreux et pouvant assurer la réalisation aisée d'un raccordement d'une pompe à chaleur (ou de tout autre dispositif adéquat) à n'importe quel endroit de l'échangeur de chaleur.

En effet, les procédés de l'état de la technique sont peu adéquats et trop onéreux pour la mise en oeuvre d'une rénovation d'une canalisation d'égout intégrant un échangeur de chaleur auquel il n'est pas certain qu'un raccordement sera effectué ultérieurement. Par exemple, le procédé décrit dans le document DE19719311 et qui repose sur une introduction d'un échangeur en acier inoxydable dans une canalisation d'égout n'est certainement pas adapté pour assurer une rénovation de cette dernière puisque ce matériau est très coûteux. En outre, comme mentionné plus haut, dès lors que les plaques formant l'échangeur de chaleur définissent des cavités d'une hauteur inférieure à 20 mm dans lesquelles circule un fluide caloporteur, il est inconcevable d'envisager de s'y connecter, par exemple en y effectuant une prise en charge du fluide caloporteur, une telle hauteur des cavités ne permettant pas de percer la plaque supérieure sans percer simultanément la plaque inférieure. Dans un tel cas de figure, l'échangeur de chaleur serait irrémédiablement endommagé et le fluide caloporteur s'en écoulerait.

Il existe donc un réel besoin de procurer un procédé permettant de solutionner au moins en partie ces problématiques rencontrées avec les procédés connus de l'état de la technique. En d'autres termes, il existe un besoin de procurer un procédé de rénovation d'une canalisation d'égout qui permet, lors de la réalisation de cette dernière, une mise en place peu onéreuse d'un échangeur de chaleur sur lequel il n'est pas certain que des pompes à chaleur (ou tout autre dispositif adéquat) seront connectées ultérieurement, l'emplacement de ces dernières et donc les zones de raccordement sur l'échangeur de chaleur n'étant pas connus au moment de la rénovation. Bien entendu, en parallèle et tout en répondant à ces problématiques, il convient également de procurer un procédé qui permet d'assurer une récupération adéquate et rentable de la chaleur issue des eaux usées.

Pour résoudre ces problèmes, il est prévu, suivant l'invention, un procédé de rénovation d'une canalisation d'égout tel qu'indiqué au début caractérisé en ce que ladite étape d'introduction d'au moins un échangeur de chaleur dans la canalisation d'égout repose sur une introduction d'un échangeur de chaleur sous la forme d'un faisceau de conduits tubulaires réalisé au moins en partie en un matériau de type polymère, de préférence en PEHD.

Suivant la présente invention, le procédé comprend donc une mise en place d'un échangeur de chaleur se présentant sous la forme d'un faisceau de conduits tubulaires réalisé au moins en partie en un matériau de type polymère, de préférence en PEHD. Dès lors que le procédé selon l'invention met en oeuvre un échangeur de chaleur formé en un matériau peu coûteux, c'est-à-dire en un matériau polymère plutôt que par exemple en acier inoxydable, il peut être appliqué largement et systématiquement lors de la rénovation de canalisations d'égout, ceci même s'il n'est pas certain qu'une pompe à chaleur y sera raccordée par la suite. En effet, au moment de la réalisation de la rénovation de la canalisation d'égout, il est impossible de prévoir où auront lieu les connexions au niveau de l'échangeur de chaleur, ces connexions ultérieures étant tout à fait aléatoires.

Par ailleurs, dès lors que les conduits tubulaires du faisceau formant l'échangeur de chaleur sont localisés dans le flux d'écoulement d'eau usée, ils sont faciles d'accès lorsqu'il convient d'effectuer une prise en charge du fluide caloporteur, par exemple lors du placement d'une pompe à chaleur d'une nouvelle habitation située à proximité de la canalisation d'égout. Cette prise en charge peut, selon l'invention, être facilement réalisée à n'importe quel endroit le long de l'échangeur de chaleur puisque les conduits tubulaires sont accessibles sans avoir à endommager le travail de rénovation antérieur ayant notamment permis la mise en place de l'échangeur de chaleur. Typiquement, la prise en charge du fluide caloporteur peut être réalisée par raccordement d'un collier de prise en charge ou de dérivation selon des techniques bien connues de l'homme de métier, par exemple à l'aide d'une scie cloche suite à un placement étanche du collier de prise en charge ou de dérivation sur un conduit tubulaire.

Selon l'invention, il est à la fois possible de rénover l'égout et de configurer ce dernier de façon à permettre la récupération de la chaleur des eaux qui circulent dans la canalisation par l'intermédiaire dudit au moins un conduit tubulaire d'échangeur de chaleur, ceci de façon peu coûteuse et en plaçant l'échangeur de chaleur de façon systématique même s'il n'est pas garanti qu'une prise en charge y sera effectuée ultérieurement.

Le procédé de rénovation selon l'invention est en outre rentable puisque les étapes d'amenée et de fixation du conduit tubulaire ne contribuent que très marginalement à la hausse des coûts qui afférent au travail de rénovation du réseau d'égout, puisqu'il a été observé que ces étapes n'occasionnent pas de pertes de rendement des travaux, que ce soit à petite ou à grande échelle.

De préférence, selon le procédé de rénovation suivant l'invention, ladite étape d'introduction d'au moins un échangeur de chaleur dans la canalisation d'égout repose sur une introduction d'un échangeur de chaleur sous la forme d'un faisceau de conduits tubulaires réalisés (formés) en un matériau de type polymère choisi dans le groupe constitué du PEHD, du PVC, du PE et de tout autre matériau polymère adéquat.

Avantageusement, selon le procédé de rénovation suivant l'invention, ladite étape d'introduction d'au moins un échangeur de chaleur dans la canalisation d'égout repose sur une introduction d'un échangeur de chaleur sous la forme d'un faisceau de conduits tubulaires présentant une section dont la hauteur est supérieure à 20 mm, de préférence supérieure à 25 mm.

De préférence, selon le procédé de rénovation suivant l'invention, ladite étape d'introduction d'au moins un échangeur de chaleur dans la canalisation d'égout repose sur une introduction d'un échangeur de chaleur sous la forme d'un faisceau de conduits tubulaires présentant par exemple une surface plane ou convexe et/ou par exemple une section circulaire ou carrée ou rectangulaire. Il est bien entendu que tout autre type de surface et que tout autre type de section adaptées rentrent dans le cadre de la présente invention. Par exemple, si la section des conduits tubulaires est circulaire, alors le diamètre des tubes sera supérieur à 20 mm et de préférence supérieur à 25 mm. Si la section des conduits tubulaires est carrée, alors les côtés du carré présenteront une taille supérieure à 20 mm et de préférence supérieure à 25 mm. Si la section des conduits tubulaires est rectangulaire, alors au moins un des côtés du rectangle présentera une taille supérieure à 20 mm et de préférence supérieure à 25 mm.

De préférence, le procédé de rénovation selon l'invention comprend en outre une étape de formation d'une jonction entre ledit au moins un premier tronçon de conduit d'écoulement d'eau et ledit au moins un échangeur de chaleur.

De façon préférée, le procédé de rénovation selon l'invention comprend en outre une étape d'étanchéisation de ladite jonction.

De préférence, l'étape de formation de la jonction est réalisée par le placement d'un coffrage perdu entre ledit au moins un échangeur de chaleur et ledit au moins un premier tronçon de conduit d'écoulement d'eau, de façon à former un espace interstitiel entre ledit au moins un faisceau et ledit au moins un premier conduit.

Avantageusement, l'étape d'étanchéisation de la jonction est réalisée par une deuxième étape de comblement dudit espace interstitiel à l'aide d'un mortier, de préférence sans retrait.

Eventuellement, ladite étape de fixation dudit au moins un échangeur de chaleur à la canalisation d'égout est réalisée par un placement d'au moins une cheville à expansion par frappe dans une première cavité percée dans la canalisation d'égout à travers un premier orifice traversant une patte de fixation dudit au moins un échangeur de chaleur à la canalisation d'égout, et par vissage d'une vis dans ladite cheville à expansion par frappe.

De manière préférentielle, ledit au moins un échangeur de chaleur est maintenu en contact à l'aide d'un moyen de connexion à ladite première surface de paroi interne de la canalisation.

De manière préférentielle, selon le procédé de rénovation suivant l'invention, ladite étape d'introduction d'au moins un échangeur de chaleur dans la canalisation d'égout repose sur une introduction d'au moins un échangeur de chaleur de section transversale complémentaire à celle de la canalisation d'égout.

De manière optionnelle, selon le procédé de rénovation suivant l'invention, ladite étape d'introduction d'au moins un échangeur de chaleur dans la canalisation d'égout repose sur une introduction d'au moins un échangeur de chaleur sous la forme d'un faisceau de conduits tubulaires en U reliés entre eux de manière continue de façon à former un conduit tubulaire en serpentin.

Eventuellement, selon le procédé de rénovation suivant l'invention, ladite étape d'introduction d'au moins un échangeur de chaleur dans la canalisation d'égout repose sur une introduction d'au moins un échangeur de chaleur sous la forme d'un faisceau de conduits tubulaires en serpentin résultant d'un pliage d'un tronçon de tube.

D'autres formes de réalisation du procédé de rénovation selon l'invention sont indiquées dans les revendications annexées.

Dans le contexte de la présente invention, la récupération de la chaleur d'eau d'égout est assurée par un procédé d'extraction de chaleur comprenant les étapes suivantes :

- la rénovation d'une canalisation d'égout selon l'invention ;
- une étape d'introduction d'un fluide caloporteur dans ledit au moins un échangeur de chaleur, ledit fluide étant de préférence de l'eau glycolée ou de l'eau, avantageusement à une température inférieure à celle de ladite eau d'égout ;
- une étape de mise en circulation dudit fluide caloporteur dans ledit au moins un échangeur de chaleur par l'intermédiaire de l'action de pompage d'une pompe à chaleur préalablement connectée de manière fluidique audit au moins un échangeur de chaleur par un dispositif circulateur de ladite pompe à chaleur; et
- une étape de collecte, et de distribution vers un corps de chauffe, de la chaleur emmagasinée dans le fluide caloporteur en circulation par l'intermédiaire d'un système couplé de compresseur-détendeur.

Ce procédé d'extraction de chaleur selon l'invention permet de tirer profit des calories des eaux d'égout en les collectant de manière rentable, dès lors qu'il a été observé de manière tout à fait surprenante que les rendements d'extraction de la chaleur obtenus avec le procédé d'extraction suivant l'invention atteignent des coefficients de performance allant de 3,0 à 5,0. Un tel coefficient de performance est tout à fait acceptable puisque de tels coefficients de performance allant de 3,0 à 5,0 correspondent au seuil de performance généralement visé pour les échangeurs de chaleur constitués de matériaux conducteurs optimisés pour les échanges de chaleur.

En outre, de par la présence de ce réseau de canalisation d'égout préexistant, la centralisation d'un réseau de conduits tubulaires installés sur plusieurs canalisations est tout à fait envisageable à moindre coût dès lors que le réseau d'égout préexistant est déjà centralisé et peut donc être exploité pour acheminer les calories captées par chaque conduit tubulaire d'échangeur de chaleur dudit faisceau vers un point central où se trouve le corps de chauffe.

D'autres formes de réalisation du procédé d'extraction de chaleur selon l'invention sont indiquées dans les revendications annexées.

D'autres caractéristiques et avantages de l'invention ressortiront de la description donnée ci-après, à titre non-limitatif.

Les figures 1a et 1b sont des vues en coupes longitudinales de tronçons de canalisation d'égout à rénover.

Les figures 2a à 2c sont des vues en coupes transversales d'un premier mode de réalisation de canalisation d'égout rénovée selon le procédé de la présente invention.

Les figures 3a et 3b sont des vues en coupes transversales d'un deuxième mode de réalisation de canalisation d'égout rénovée selon le procédé de la présente invention.

Les figures 4 à 6 sont d'autres vues en coupes transversales de modes de réalisation de canalisation d'égout rénovée selon le procédé de la présente invention.

Sur ces figures les éléments analogues présentent la même référence.

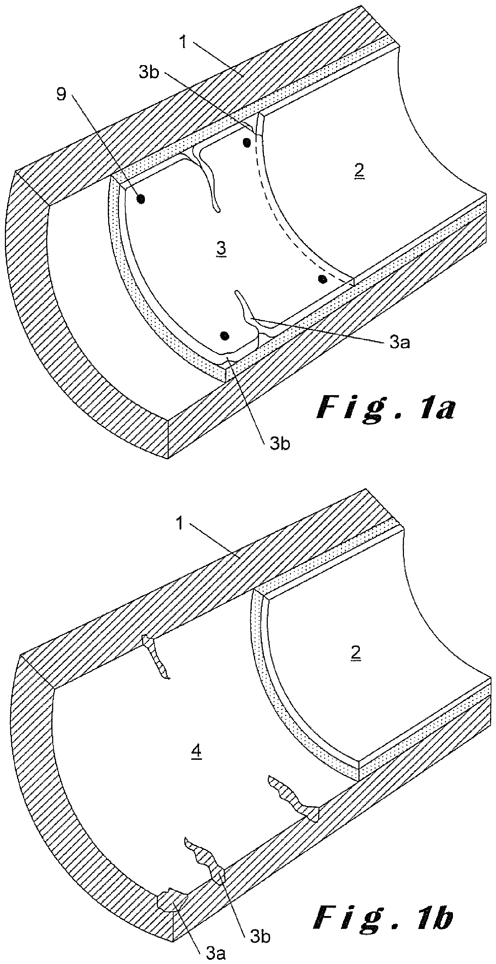

La figure 1a illustre une vue en coupe longitudinale d'un tronçon de canalisation d'égout 1 à rénover. Dans ce premier mode particulier de réalisation du procédé de rénovation selon l'invention, le tronçon de canalisation à rénover est un tronçon ayant déjà fait l'objet d'une rénovation conventionnelle précédente. Ce tronçon de canalisation présente un premier tronçon de conduit d'écoulement 2 non usagé, c'est-à-dire qui permet encore l'écoulement des eaux d'égout à travers la canalisation, relié à un deuxième tronçon de conduit d'écoulement détérioré 3, qui doit être enlevé et remplacé pour restaurer la fonction d'évacuation d'eau de la canalisation d'égout 1.

Dans la figure 1a, le deuxième tronçon de conduit usagé 3 présente typiquement des fissures 3a ou des points d'érosion 3b qui perturbent l'écoulement de l'eau le long d'un flux d'écoulement le long des tronçons de conduit. Il en résulte la création de régions de stagnation d'eau ou d'infiltration d'eau à partir du tronçon de conduit détérioré 3 vers la canalisation 1 et une dégradation progressive de cette dernière.

La figure 1a illustre donc un premier point de départ du procédé de rénovation selon l'invention qui porte sur la rénovation du deuxième tronçon de conduit usagé 3 de la canalisation ayant fait l'objet d'au moins une rénovation précédente.

La figure 1b illustre une coupe longitudinale du tronçon de canalisation 1 laissant apparaître une partie de surface de paroi interne 4 de la canalisation 1 qui présente elle aussi des fissures 3a ou des points d'érosion 3b. La figure 1b représente donc un deuxième mode particulier de réalisation du procédé de rénovation selon l'invention dans lequel le point de départ est le tronçon de canalisation usagé doit être rénové pour la première fois.

Partant du point de départ illustré à la figure 1a ou à la figure 1b, un échangeur de chaleur 5 sous la forme d'un faisceau de conduits tubulaires 5a à fluide caloporteur est amené dans une enceinte définie par la paroi interne 4 de la canalisation 1 et dans le prolongement du premier tronçon de conduit 2.

Dans le contexte du premier mode de réalisation du procédé de rénovation, le deuxième tronçon détérioré 3 est enlevé préalablement à l'amenée de l'échangeur de chaleur 5 sous la forme d'un faisceau de conduits tubulaires 5a.

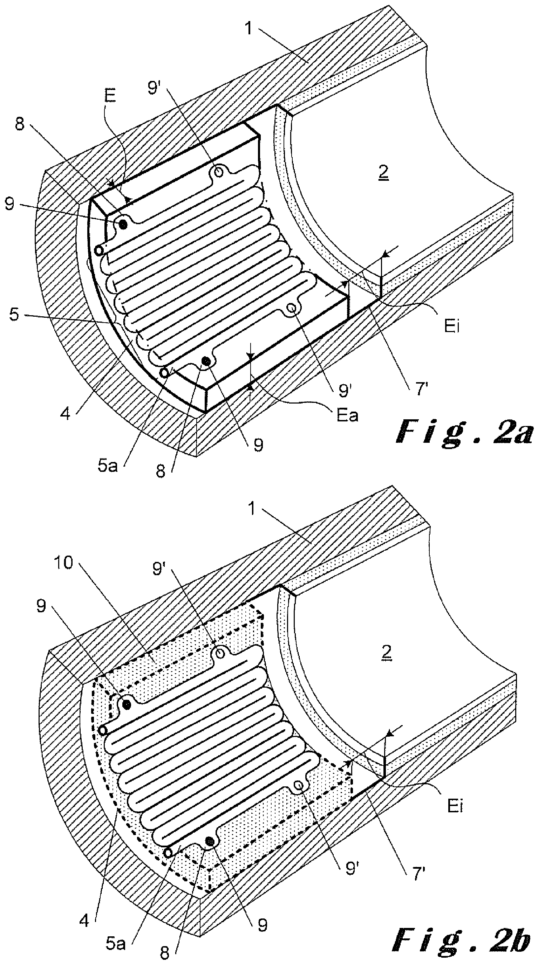

Les figures 2a à 2c illustrent un mode de réalisation du procédé de rénovation selon l'invention dans lequel est présent un espace interstitiel entre l'échangeur de chaleur 5 et le premier tronçon 2 de conduit d'écoulement d'eau. Comme illustré à la figure 2a, suite à une étape d'introduction d'un échangeur de chaleur 5 dans la canalisation 1, un espace annulaire $E_a$ est formé entre une première surface de paroi interne 4 de la canalisation 1 et une deuxième surface de première paroi externe (face inférieure de l'échangeur de chaleur) de l'échangeur de chaleur 5, laquelle deuxième surface de première paroi externe fait face à la paroi interne 4 de la canalisation.

Une fois l'échangeur de chaleur 5 amené dans la canalisation 1, une jonction 7 entre le premier tronçon de conduit 2 et le faisceau 5 de conduits tubulaires 5a est formée. Cette étape est illustrée aux figures 2a et 2b.

De préférence, l'étape de formation de la jonction 7 est réalisée par le placement d'un coffrage perdu 7' entre ledit au moins un échangeur de chaleur 5 et ledit au moins un premier tronçon 2 de conduit d'écoulement d'eau, de façon à former un espace interstitiel $E_i$ entre ledit au moins un échangeur de chaleur 5 et ledit au moins un premier conduit 2.

Comme l'illustre la figure 2a, le coffrage perdu 7' permet de maintenir l'échangeur de chaleur 5 dans une position de jonction prédéterminée si un espace doit être observé entre ledit échangeur de chaleur 5 et ledit au moins un premier conduit 2.

Après l'étape de jonction, s'en suit une première étape de fixation de l'échangeur de chaleur 5 à la canalisation d'égout.

Cette étape, illustrée aux figures 2a et 2b, est avantageusement réalisée par un placement d'au moins une cheville 9 à expansion par frappe dans une première cavité percée dans la canalisation d'égout à travers un premier orifice 9' traversant une patte de fixation 8 de l'échangeur de chaleur 5 à la canalisation d'égout 1, et par vissage d'une vis dans la cheville à expansion par frappe 9.

Le procédé de rénovation comprend en outre une étape de comblement de l'espace annulaire $E_a$ à l'aide d'un mortier 10, avantageusement fluide, de préférence sans retrait, de façon à fixer définitivement l'échangeur de chaleur 5 à la canalisation 1. L'échangeur de chaleur 5 constitue donc, au sens de la présente invention, un coffrage perdu.

La jonction 7 peut être ensuite rendue étanche, de préférence par une deuxième étape de comblement de l'espace interstitiel $E_i$ à l'aide d'un mortier, avantageusement fluide, de préférence sans retrait.

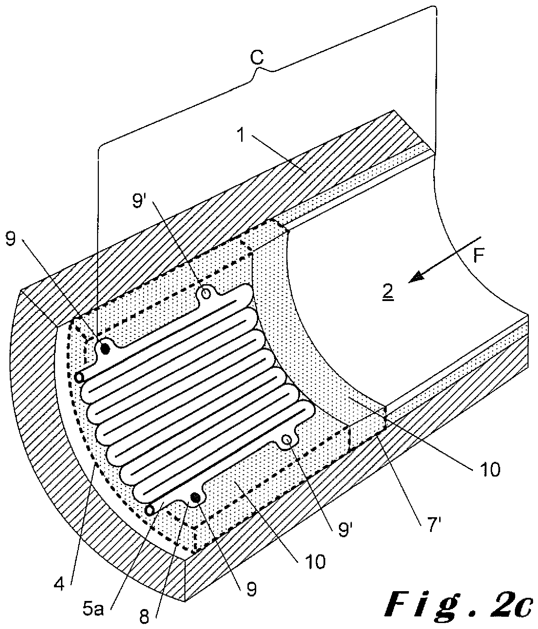

Le comblement de l'espace annulaire $E_a$ et de l'espace interstitiel $E_i$ est réalisé par le coulage de mortier de comblement 10 au niveau des coffrages perdus, comme illustré aux figures 2b et 2c.

A la fin du procédé de rénovation selon l'invention, une canalisation telle qu'illustrée à la figure 2c est obtenue. Comme le montre cette figure, l'échangeur de chaleur 5 est intégré à la canalisation de façon à former avec le premier tronçon 2 de conduit préexistant un conduit d'écoulement d'eau **C**. De cette façon, l'échangeur de chaleur 5 se trouve, au moins en partie, dans un flux d'écoulement d'eau **F** dans le conduit d'écoulement d'eau **C**.

Alternativement, le faisceau formant l'échangeur de chaleur 5 est constitué d'une pluralité de conduits tubulaires en U reliés entre eux de manière continue de façon à former un conduit tubulaire en serpentin.

De manière préférentielle, le faisceau de conduits tubulaires 5a formant l'échangeur de chaleur 5 est constitué d'un faisceau de conduits tubulaires en serpentin résultant d'un pliage d'un tronçon de tube.

De manière avantageuse, l'échangeur de chaleur 5 formé par le faisceau de conduits tubulaires 5a présente une section transversale de forme prédéterminée de façon à ce que le faisceau s'emboite dans le profil transversal de surface de paroi interne 4 de la canalisation d'égout. En particulier, le faisceau de conduits tubulaires 5a présente une section transversale complémentaire à celle de la canalisation d'égout.

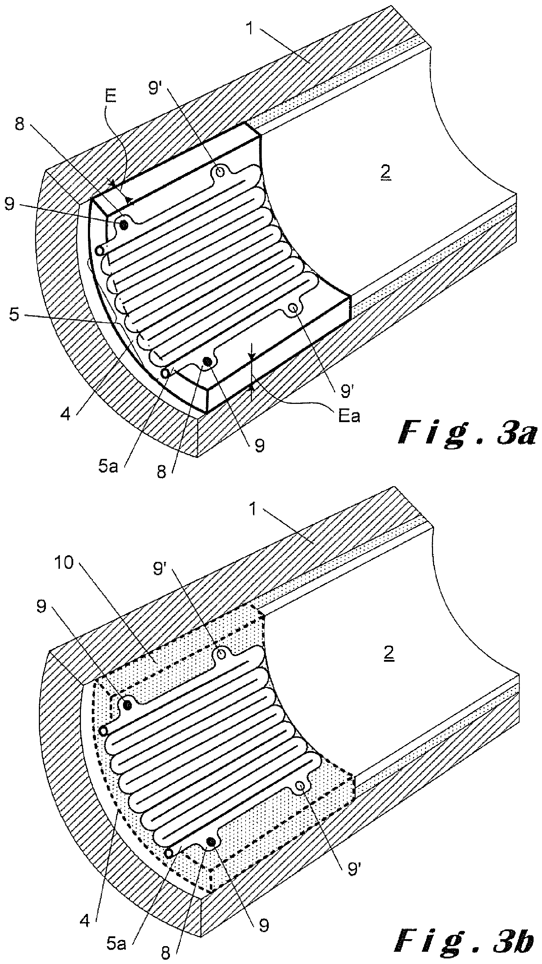

Les figures 3a et 3b illustrent un autre mode de réalisation du procédé de rénovation selon l'invention où il n'y a pas d'espace interstitiel entre l'échangeur de chaleur 5 et le premier tronçon 2 de conduit d'écoulement d'eau. Les mêmes éléments et les mêmes étapes que ceux commentés et illustrés aux figures 2a à 2c sont repris aux figures 3a et 3b hormis tout ce qui concerne la jonction 7' et l'espace interstitiel $E_i$ dès lors que cette jonction 7' et cet espace interstitiel $E_i$ ne sont pas présents selon ce mode de réalisation suivant l'invention.

Selon l'invention, les conduits tubulaires sont réalisés, au moins en partie, en un matériau polymère, par exemple en polyéthylène de haute densité PEHD, ce qui permet de conférer audit faisceau de conduits tubulaires une passivité chimique améliorée, prévenant ainsi sa dégradation par l'eau d'égout qui peut comprendre des substances corrosives qui y sont dissoutes (acides, bases, etc.).

Le procédé de rénovation peut en outre comprendre une étape additionnelle d'étanchéisation et/ou de renforcement de la canalisation 1 d'égout qui peut être réalisée par la pose d'une couche d'ancrage 12a, 12b de manière continue sur au moins une partie de surface de paroi interne 4a, 4b de la canalisation 1 et au moins une partie 13a, 13b de surface 13 de paroi interne d'une couche de mortier 10 de comblement d'espace annulaire $E_a$ disposée entre le faisceau 5 de conduits tubulaires 5a et la surface de paroi interne 4 de la canalisation d'égout 1.

De cette façon, une couche hydrophobe reliant de manière étanche la paroi interne 13 de la couche de mortier 10 de comblement d'espace annulaire $E_a$ et une partie de surface de paroi interne 4 de la canalisation est formée, prévenant ainsi d'éventuelle infiltration d'eau entre la canalisation 1 et la couche de comblement 10 posée.

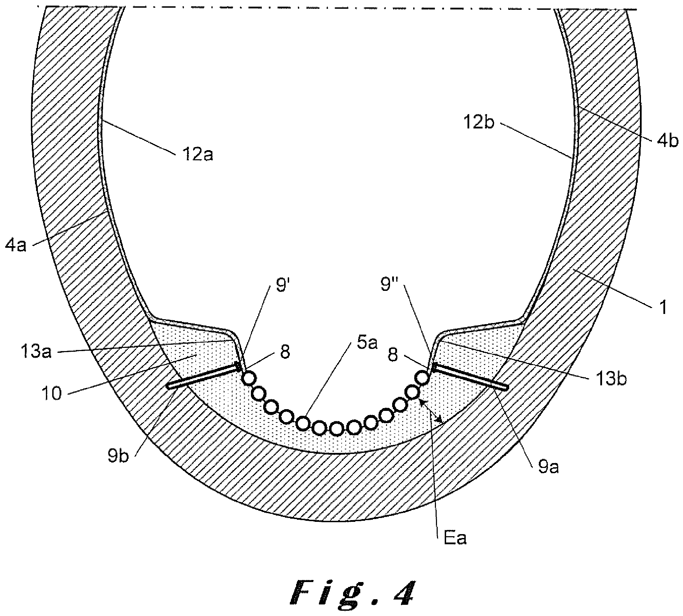

Les figures 4 à 6 illustrent chacune de manière non-limitative une représentation distincte d'une canalisation rénovée selon le procédé de rénovation selon l'invention.

La figure 4 est une première vue en coupe transversale d'un première mode de réalisation d'une canalisation d'égout de type ovoïdale rénovée selon le procédé de la présente invention.

Dans ce premier mode de réalisation prévu par la présente invention, la canalisation d'égout 1 présente un faisceau de conduits tubulaires 5a de section transversale circulaire formant l'échangeur de chaleur 5, lequel est fixé par au moins deux chevilles à expansion par frappe 9a, 9b, chacune des chevilles étant placée dans une première et une deuxième cavités percées dans la canalisation d'égout 1 à travers un premier 9' et un deuxième 9" orifices traversant chacun transversalement une patte 8 de fixation de l'échangeur de chaleur 5, et par vissage d'une vis dans la cheville à expansion par frappe.

Dans ce premier mode de réalisation d'une canalisation rénovée, chacune des chevilles traverse l'espace annulaire $E_a$. Les chevilles sont destinées à être coffrées dans un coulis de mortier sans retrait 10 et le placement d'une vis dans chacune des chevilles est réalisé avant ou après la prise du mortier sans retrait 10. Dans ce contexte, le coulis de mortier sans retrait est un mélange servant au remplissage de vide annulaire défini dans l'espace annulaire $E_a$.

L'étanchéité de la canalisation rénovée est en outre assurée par la pose de la couche d'ancrage 12a, 12b en résine époxy en continu sur une première partie 4a, 4b de surface interne 4 de la canalisation 1 et une deuxième partie de surface 13a, 13b de paroi interne 13 de la couche de mortier de comblement 10 de l'espace annulaire $E_a$.

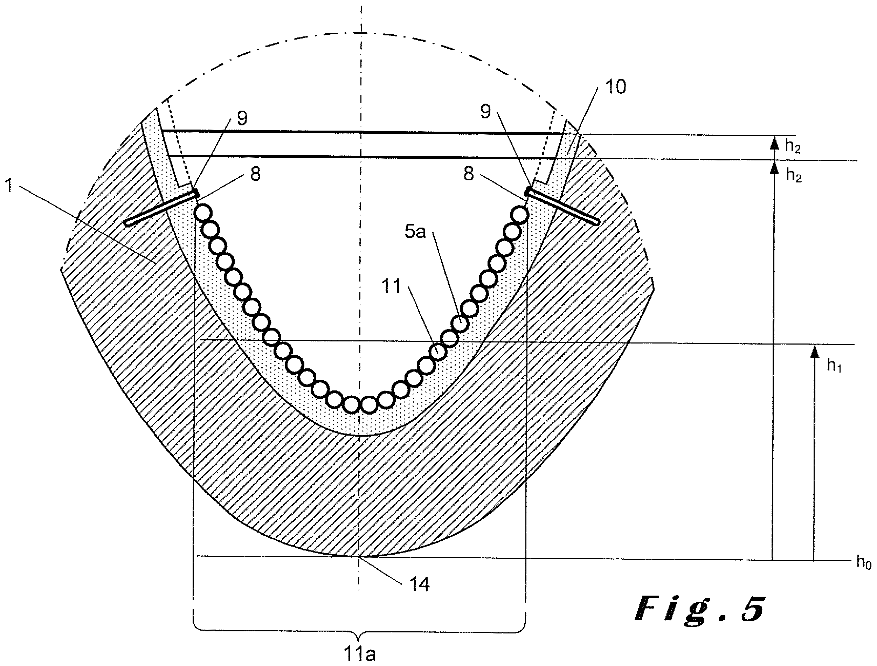

La figure 5 est une deuxième vue en coupe transversale d'un deuxième mode de réalisation de la canalisation d'égout de type ovoïdale rénovée selon le procédé de la présente invention.

Dans cette figure est illustré le faisceau de conduits tubulaires 5a de section transversale ovoïdale complémentaire à celle de de la canalisation 1, ce faisceau formant l'échangeur de chaleur 5.

Cette figure illustre en outre le placement du faisceau de conduits tubulaires 5a dans une zone de passage du flux d'eau d'égout, définie entre une première hauteur $h_1$ et une deuxième hauteur $h_2$. La hauteur $h_1$ correspond à la hauteur d'eau en cas de temps sec, la hauteur $h_2$ correspond à la hauteur d'eau en cas d'averse, les hauteurs $h_1$ et $h_2$ étant déterminées à partir d'un plan $h_0$ horizontal de référence sur lequel repose la canalisation 1.

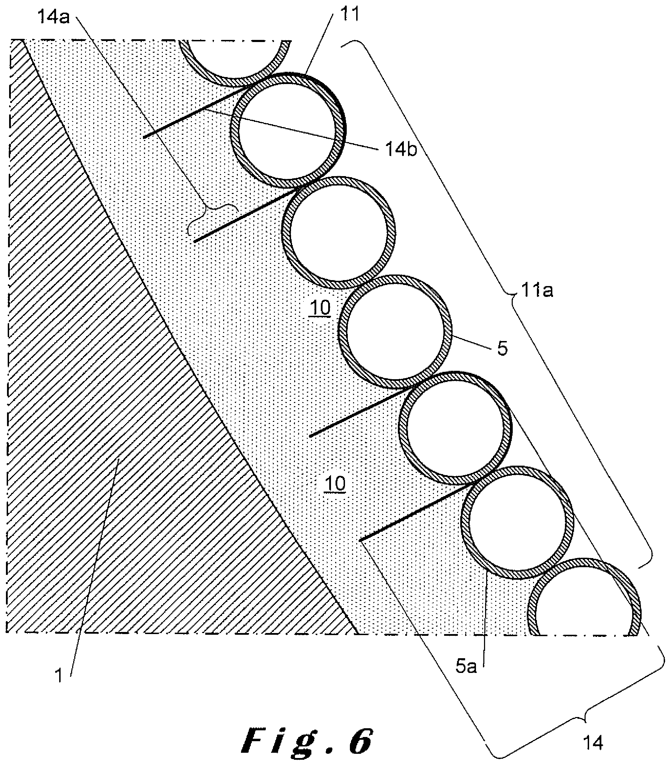

La figure 6 illustre un troisième mode de réalisation de canalisation d'égout rénovée selon le procédé de rénovation suivant l'invention. Cette canalisation rénovée comprend un faisceau de conduits tubulaires 5a dans lequel chaque conduit tubulaire 5a est maintenu en contact à l'aide d'un système de fixation par queue d'aronde 14a, 14b contre la partie de surface interne 4 de la canalisation 1.

Pour chacune des canalisations décrites ci-dessus, les dimensions du faisceau de conduits tubulaires dépendent des dimensions de la canalisation d'égout à rénover.

A titre d'exemple et de manière non-limitative, pour une canalisation d'égout de type ovoïde ou circulaire, de diamètre moyen compris entre 2,0 et 2,5 m, le faisceau présentera une longueur moyenne comprise entre 5 et 7 m, de préférence de 6 m, et une largueur comprise entre 1 et 1,5 m, étant entendu que la largueur est mesurée pour un faisceau développé sur une surface plane. Le diamètre de chaque conduit du faisceau dépend du rayon de courbure du tronçon de conduit découlement sur lequel il repose.

A titre illustratif et non-limitatif, pour une cunette de section transversale circulaire présentant un rayon de courbure de 2 m, le diamètre de chaque conduit tubulaire est compris entre 20 mm et 60 mm.

Pour récupérer la chaleur de l'eau d'égout, la présente invention prévoit un procédé d'extraction de la chaleur de l'eau d'égout comprenant les étapes suivantes :

- la rénovation d'une canalisation d'égout selon l'invention pour obtenir une canalisation rénovée ;
- une étape d'introduction d'un fluide caloporteur dans l'échangeur de chaleur 5 ;
- une étape de mise en circulation dans l'échangeur de chaleur 5 placé dans la canalisation rénovée par pompage du fluide caloporteur par l'intermédiaire de la pompe à chaleur préalablement connectée à l'échangeur de chaleur 5, le fluide caloporteur étant par exemple de l'eau glycolée ou de l'eau, de préférence à une température inférieure à celle de l'eau d'égout ; et

- une étape de collecte, et de distribution vers un corps de chauffe, de la chaleur emmagasinée dans le fluide caloporteur en circulation par l'intermédiaire d'un système couplé de compresseur - détendeur.

De manière optimale, la température de l'eau sera déterminée en fonction des conditions de pompe à chaleur (capacité calorifique, etc.) qui est déterminée par la demande en énergie et par le réseau de chauffage préexistant.

Le procédé d'extraction de chaleur d'eau d'égout suivant l'invention permet d'atteindre d'extraction de la chaleur avec un coefficient de performance (CP) allant de 3,0 à 5,0. Ces résultats sont obtenus pour un échangeur de chaleur 5 formé par un faisceau de conduits tubulaires 5a réalisé en PHED et sont tout à fait surprenants puisque le PEHD est un matériau reconnu comme étant peu conducteur de chaleur.

En effet, dans le cadre de la présente invention, le rendement d'extraction de chaleur se mesure à l'aide du coefficient de performance qui détermine un indice d'efficacité énergétique de la pompe à chaleur reliée à l'échangeur de chaleur.

Ce coefficient de performance (CP) est le quotient de la chaleur extraite **Q** (par exemple exprimée en joule) par la pompe depuis l'eau d'égout par le travail **W** (en joule) fourni par la pompe pour extraire les calories de l'eau d'égout :

$$CP = Q/W$$

A titre d'exemple, une pompe à chaleur avec un CP de 3,0 apporte 3,0 unités de chaleur **Q** pour chaque unité d'énergie consommée **W**. Sur ces 3,0 unités de chaleur, 2,0 unités de chaleur sont extraites de l'eau d'égout (chaleur puisée par le fluide caloporteur circulant dans l'échangeur de chaleur) tandis qu'une unité est consommée pour le fonctionnement de la pompe.

Il est bien entendu que la présente invention n'est en aucune façon limitée aux formes de réalisations décrites ci-dessus et que bien des modifications peuvent y être apportées sans sortir du cadre des revendications annexées.

**Revendications**

1. Procédé de rénovation d'une canalisation d'égout (1) présentant au moins un premier tronçon (2) de conduit d'écoulement d'eau, ledit procédé comprenant les étapes suivantes :

    - une étape d'introduction d'au moins un échangeur de chaleur (5) dans la canalisation d'égout (1) et dans le prolongement dudit premier tronçon (2) de conduit de façon à ce que ledit au moins un échangeur de chaleur (5) se trouve, au moins en partie, dans un flux d'écoulement d'eau dans un conduit d'écoulement d'eau, ledit conduit d'écoulement d'eau étant formé par ledit au moins un échangeur de chaleur (5) et ledit au moins un premier tronçon (2) de conduit d'écoulement, l'échangeur de chaleur (5) comprenant des conduits tubulaires (5a) réalisé au moins en partie en un matériau de type polymère, de préférence en PEHD;
- une étape de fixation dudit au moins un échangeur de chaleur (5) à ladite canalisation d'égout (1) de façon à former un espace annulaire ($E_a$) entre une première surface de paroi interne (4) de la canalisation (1) et une deuxième surface de paroi externe (6) dudit au moins un échangeur de chaleur (5); et
- une première étape de comblement dudit espace annulaire ($E_a$) à l'aide d'un mortier, de préférence sans retrait ;

ledit procédé étant **caractérisé en ce que** ladite étape d'introduction d'au moins un échangeur de chaleur (5) dans la canalisation d'égout (1) repose sur

  a) une introduction dudit échangeur de chaleur (5) sous la forme d'un faisceau de conduits tubulaires (5a), ledit faisceau de conduits tubulaires (5a) formant alors un coffrage perdu entre ladite première surface de paroi interne (4) de la canalisation (1) et une deuxième surface de paroi externe (6) dudit faisceau de conduits tubulaires (5a); et sur
  b) une localisation desdits conduits tubulaires (5a) du faisceau formant l'échangeur de chaleur (5) dans ledit flux d'écoulement d'eau.

2. Procédé de rénovation selon la revendication 1, dans lequel ladite étape d'introduction d'au moins un échangeur de chaleur (5) dans la canalisation d'égout (1) repose sur une introduction dudit échangeur de chaleur (5) sous la forme d'un faisceau de conduits tubulaires (5a) présentant une section dont la hauteur est supérieure à 20 mm, de préférence supérieure à 25 mm.

3. Procédé de rénovation selon la revendication 1 ou 2 comprenant en outre une étape de formation d'une jonction (7) entre ledit au moins un premier tronçon (2) de conduit d'écoulement d'eau et ledit au moins un échangeur de chaleur (5).

4. Procédé de rénovation selon la revendication 3, dans lequel une étape d'étanchéisation de ladite jonction (7) est réalisée.

5. Procédé de rénovation selon la revendication 3, dans lequel l'étape de formation de la jonction (7) est réalisée par le placement d'un coffrage perdu (7') entre ledit au moins un échangeur de chaleur (5) et ledit au moins un premier tronçon (2) de conduit d'écoulement d'eau, de façon à former un espace interstitiel ($E_i$) entre ledit au moins un échangeur de chaleur (5) et ledit au moins un premier conduit (2).

6. Procédé de rénovation selon la revendication 5, dans lequel l'étape d'étanchéisation de la jonction (7) est réalisée par une deuxième étape de comblement dudit espace interstitiel ($E_i$) à l'aide d'un mortier, de préférence sans retrait.

7. Procédé de rénovation selon l'une quelconque des revendications précédentes, dans lequel ladite étape de fixation dudit au moins un échangeur de chaleur (5) à la canalisation d'égout (1) est réalisée par un placement d'au moins une cheville (9) à expansion par frappe dans une première cavité percée dans la canalisation d'égout (1) à travers un premier orifice (9') traversant une patte de fixation (8) dudit au moins un échangeur de chaleur (5) à la canalisation d'égout (1), et par vissage d'une vis dans ladite cheville à expansion par frappe.

8. Procédé de rénovation selon l'une quelconque des revendications précédentes, dans lequel ledit au moins un échangeur de chaleur (5) est maintenu en contact à l'aide d'un moyen de connexion (14a,14b) à ladite première surface de paroi interne (4) de la canalisation (1).

9. Procédé de rénovation selon l'une quelconque des revendications précédentes, dans lequel ladite étape d'introduction d'au moins un échangeur de chaleur (5) dans la canalisation d'égout (1) repose sur une introduction dudit au moins un échangeur de chaleur (5) de section transversale complémentaire à celle de la canalisation d'égout (1).

10. Procédé de rénovation selon l'une quelconque des revendications précédentes, dans lequel ladite étape d'introduction d'au moins un échangeur de chaleur (5) dans la canalisation d'égout (1) repose sur une introduction dudit au moins un échangeur de chaleur (5) sous la forme d'un faisceau de conduits tubulaires (5a) en U reliés entre eux de manière continue de façon à former un conduit tubulaire en serpentin.

11. Procédé de rénovation d'égout selon l'une quelconque des revendications précédentes, dans lequel ladite étape d'introduction d'au moins un échangeur de chaleur (5) dans la canalisation d'égout (1) repose sur une introduction dudit au moins un échangeur de chaleur (5) sous la forme d'un faisceau de conduits tubulaires (5a) en serpentin résultant d'un pliage d'un tronçon de tube.

**12.** Procédé d'extraction de chaleur d'eau d'égout comprenant :

- une rénovation d'une canalisation d'égout (1) selon les étapes du procédé défini selon l'une quelconque des revendications précédentes ;
- une étape d'introduction d'un fluide caloporteur dans ledit au moins un échangeur de chaleur (5);
- une étape de mise en circulation dudit fluide caloporteur dans ledit au moins un échangeur de chaleur (5) par l'intermédiaire de l'action de pompage d'une pompe à chaleur, préalablement connectée de manière fluidique audit au moins un échangeur de chaleur (5) par un dispositif circulateur de ladite pompe à chaleur ; et
- une étape de collecte, et de distribution vers un corps de chauffe, de la chaleur emmagasinée dans le fluide caloporteur en circulation par l'intermédiaire d'un système couplé de compresseur - détendeur.

**13.** Procédé d'extraction de chaleur selon la revendication 12, comprenant une étape d'amenée d'un fluide caloporteur qui est de l'eau glycolée ou de l'eau, à une température inférieure à celle de ladite eau d'égout.

**Patentansprüche**

**1.** Verfahren zur Sanierung eines Abwasserkanals (1), welcher zumindest einen ersten Abschnitt (2) einer Wasserableitung aufweist, wobei das Verfahren die folgenden Schritte umfasst:

- einen Schritt zum Einführen von mindestens einem Wärmetauscher (5) in den Abwasserkanal (1) und in die Verlängerung des ersten Leitungsabschnitts (2), sodass der mindestens eine Wärmetauscher (5) sich, zumindest teilweise, in einem Wasserabfluss in einer Wasserableitung befindet, wobei die Wasserableitung durch den mindestens einen Wärmetauscher (5) und den zumindest einen ersten Abschnitt (2) der Ableitung gebildet ist, wobei der Wärmetauscher (5) Rohrleitungen (5a) umfasst, die zumindest teilweise aus einem Material des Typs Polymer hergestellt sind, bevorzugt aus HDPE;
- einen Schritt zum Befestigen des mindestens einen Wärmetauschers (5) am Abwasserkanal (1), sodass ein ringförmiger Raum ($E_a$) zwischen einer ersten Oberfläche der Innenwand (4) des Kanals (1) und einer zweiten Oberfläche der Außenwand (6) des mindestens einen Wärmetauschers (5) entsteht;
- einen ersten Schritt zum Füllens des ringförmigen Raums ($E_a$) mithilfe eines, bevorzugt schrumpffreien, Mörtels;

wobei das Verfahren **dadurch gekennzeichnet ist, dass** der Schritt zum Einführen von mindestens einem Wärmetauscher (5) in den Abwasserkanal (1) beruht auf

a) einer Einführung des Wärmetauschers (5) in Form eines Bündels von Rohrleitungen (5a), wobei das Bündel von Rohrleitungen (5a) somit eine verlorene Schalung zwischen der erwähnten ersten Oberfläche der Innenwand (4) des Kanals (1) und einer zweiten Oberfläche der Außenwand (6) des erwähnten Bündels von Rohrleitungen (5a) bildet;
und auf
b) einer Lokalisierung der Rohrleitungen (5a) des Bündels, welche den Wärmetauscher (5) bilden, im Wasserabfluss.

**2.** Verfahren zur Sanierung nach Anspruch 1, wobei der Schritt zum Einführen von mindestens einem Wärmetauscher (5) in den Abwasserkanal (1) auf einer Einführung des Wärmetauschers (5) in Form eines Bündels von Rohrleitungen (5a) beruht, welche einen Querschnitt aufweisen, dessen Höhe mehr als 20 mm beträgt, bevorzugt mehr als 25 mm.

**3.** Verfahren zur Sanierung nach Anspruch 1 oder 2, welches ferner einen Schritt zum Herstellen einer Verbindung (7) zwischen dem zumindest einen ersten Abschnitt (2) der Wasserableitung und dem mindestens einen Wärmetauscher (5) umfasst.

**4.** Verfahren zur Sanierung nach Anspruch 3, wobei ein Schritt des Abdichtens der Verbindung (7) durchgeführt wird.

**5.** Verfahren zur Sanierung nach Anspruch 3, wobei der Schritt zum Herstellen der Verbindung (7) durch die Platzierung einer verlorenen Schalung (7') zwischen dem mindestens einen Wärmetauscher (5) und dem zumindest einen ersten Abschnitt (2) der Wasserableitung durchgeführt wird, sodass ein Zwischenraum ($E_i$) zwischen dem mindestens einen Wärmetauscher (5) und der zumindest einen ersten Leitung (2) gebildet wird.

**6.** Verfahren zur Sanierung nach Anspruch 5, wobei der Schritt zum Abdichten der Verbindung (7) durch einen zweiten Schritt zum Ausfüllen des Zwischenraums ($E_i$) mithilfe eines, bevorzugt schrumpffreien, Mörtels durchgeführt wird.

**7.** Verfahren zur Sanierung nach irgendeinem der vorigen Ansprüche, wobei der erwähnte Schritt des Befestigens des mindestens einen Wärmetauschers (5) am Abwasserkanal (1) durch Anbringung von mindestens einem Schlagdübel (9) in einem ersten Hohlraum, gebohrt in den Abwasserkanal (1) durch eine erste Öffnung (9') in einer Befestigungslasche (8) des mindestens einen Wärmetauschers (5), am Abwasserkanal (1), und durch Schrauben einer Schraube in den Schlagdübel durchgeführt wird.

8. Verfahren zur Sanierung nach irgendeinem der vorigen Ansprüche, wobei der mindestens eine Wärmetauscher (5) mithilfe eines Verbindungsmittels (14a, 14b) in Kontakt mit der ersten Oberfläche der Innenwand (4) des Kanals (1) gehalten wird.

9. Verfahren zur Sanierung nach irgendeinem der vorigen Ansprüche, wobei der erwähnte Schritt zum Einführen von mindestens einem Wärmetauscher (5) in den Abwasserkanal (1) auf einer Einführung des mindestens einen Wärmetauschers (5) mit einem zum Querschnitt des Abwasserkanals (1) komplementären Querschnitt beruht.

10. Verfahren zur Sanierung nach irgendeinem der vorigen Ansprüche, wobei der Schritt des Einführens von mindestens einem Wärmetauscher (5) in den Abwasserkanal (1) auf einer Einführung des mindestens einen Wärmetauschers (5) in Form eines Bündels von Rohrleitungen (5a) in U-Form beruht, welche miteinander durchlaufend verbunden sind, sodass sie eine mäanderförmige Rohrleitung bilden.

11. Verfahren zur Sanierung eines Kanals nach irgendeinem der vorigen Ansprüche, wobei der Schritt zum Einführen von mindestens einem Wärmetauscher (5) in den Abwasserkanal (1) auf einer Einführung des mindestens einen Wärmetauschers (5) in Form eines Bündels von Rohrleitungen (5a) in Mäanderform beruht, was durch das Falten eines Rohrabschnitts entsteht.

12. Verfahren zum Abzug von Wärme aus dem Kanalisationswasser, welches Folgendes umfasst:

     - eine Sanierung eines Abwasserkanals (1) nach den Schritten des Verfahrens, welches nach irgendeinem der vorigen Ansprüche definiert ist;
     - einen Schritt zum Einführens einer Wärmeträgerflüssigkeit in den mindestens einen Wärmetauscher (5);
     - einen Schritt zum Inumlaufbringens der Wärmeträgerflüssigkeit im mindestens einen Wärmetauscher (5) durch die Pumpwirkung einer Wärmepumpe, welche vorab fluidisch mit dem mindestens einen Wärmetauscher (5) durch einen Zirkulator der Wärmepumpe verbunden wurde; und
     - einen Schritt zum Sammeln und Verteilen an einen Heizkörper der in der zirkulierenden Wärmeträgerflüssigkeit gespeicherten Wärme mittels eines gekoppelten Systems mit Kompressor - Druckminderer.

13. Verfahren zur Wärmegewinnung nach Anspruch 12, welches einen Schritt zum Zuführen einer Wärmeträgerflüssigkeit, die Sole oder Wasser ist, bei einer Temperatur unter jener des erwähnten Abwassers umfasst.

## Claims

1. Renovation method of a sewer pipe (1) presenting at least one first section (2) of a water flow duct, said method comprising the following steps:

     - a step of introducing at least one heat exchanger (5) into the sewer pipe (1) in the extension of said first section (2) of duct so that said at least one heat exchanger (5) is located, at least in part, in a stream of flowing water in a water flow duct, said water flow duct being formed by said at least one heat exchanger (5) and said at least one first section (2) of the water flow duct, the heat exchanger (5) comprising tubular ducts (5a) made at least in part in a polymer-type material, preferably of PEHD;
     - a step of fixing said at least one heat exchanger (5) to said sewer pipe (1) so as to form an annular space ($E_a$) between a first inner wall surface (4) of the pipe (1) and a second outer wall surface (6) of said at least one heat exchanger (5) and;
     - a first step of filling of said annular space ($E_a$) with mortar, preferably non-shrink mortar;

said process being **characterised in that** the step of introducing at least one heat exchanger (5) into the sewer pipe (1) is based on

     a) an introduction of said heat exchanger (5) in the form of a bundle of tubular ducts ($5_a$), said bundle of tubular ducts ($5_a$) forming a lost formwork between said first inner wall surface (4) of the pipe (1) and a second outer wall surface (6) of said bundle of tubular ducts (5a);
     and on
     b) a location of said tubular ducts (5a) of the bundle forming the heat exchanger (5) in said stream of flowing water.

2. Renovation method according to claim 1, wherein said step of introducing at least one heat exchanger (5) into the sewer pipe (1) is based on an introduction of said heat exchanger (5) in the form of a bundle of tubular ducts (5a) presenting a cross-section whose height is greater than 20 mm, preferably greater than 25 mm.

3. Renovation method according to claim 1 or 2, further comprising a step of forming a junction (7) between said at least one first section (2) of water flow duct and said at least one heat exchanger (5).

4. Renovation method according to claim 3, wherein a step of sealing said junction (7) is achieved.

5. Renovation method according to claim 3, wherein the step of forming the junction (7) is achieved by placing a lost formwork (7') between said at least one heat exchanger (5) and said at least one first section (2) of the water flow duct, so as to form an interstitial space ($E_i$) between said at least one heat exchanger (5) and said at least one first duct (2).

6. Renovation method according to claim 5, wherein the junction (7) sealing step is achieved by a second filling step of said interstitial space ($E_i$) with mortar, preferably non-shrink mortar.

7. Renovation method according to any one of the preceding claims, wherein said step of fixing said at least one heat exchanger (5) to the sewer pipe (1) is achieved by placing at least one impact expansion dowel (9) in a first cavity pierced in the sewer pipe (1) through a first hole (9') passing through the mounting bracket (8) of said at least one heat exchanger (5) to the sewer pipe (1), and by screwing a screw into said impact expansion dowel.

8. Renovation method according to any one of the preceding claims, wherein said at least one heat exchanger (5) is maintained in contact by a connection means (14a, 14b) to said first inner wall surface (4) of the pipe (1).

9. Renovation method according to any one of the preceding claims, wherein said step of introducing at least one heat exchanger (5) into the sewer pipe (1) is based on an introduction of said at least one heat exchanger (5) of a complementary cross-section to that of the sewer pipe (1).

10. Renovation method according to any one of the preceding claims, wherein said step of introducing at least one heat exchanger (5) into the sewer pipe (1) is based on an introduction of said at least one heat exchanger (5) in the form of a bundle of U-shaped tubular ducts (5a) connected to one another in a continuous manner so as to form a tubular duct in a coil.

11. Renovation method of a sewer according to any one of the preceding claims, wherein said step of introducing at least one heat exchanger (5) into the sewer pipe (1) is based on the introduction of said at least one heat exchanger (5) in the form of a bundle of tubular ducts (5a) in a coil resulting from the folding of a tube section.

12. Method for extracting heat from sewer water comprising:

- the renovation of a sewer pipe (1) according to the steps of the method according to any one of the preceding claims;
- a step of introducing a heat-transfer fluid in said at least one heat exchanger (5);
- a step of circulating said heat-transfer fluid in said at least one heat exchanger (5) via the pumping action of a heat pump, previously fluidly connected to said at least one heat exchanger (5) by a circulator device of said heat-pump; and
- a step of collecting and distributing to a heating element the heat stored in the circulating heat-transfer fluid via a coupled compressor-expander system.

13. Renovation method according to claim 12, comprising a step of supplying a heat-transfer fluid which is glycolated water or water, at a temperature below that of said sewer water.

Fig. 1a

Fig. 1b

**Fig. 2a**

**Fig. 2b**

*Fig.2c*

*Fig. 3a*

*Fig. 3b*

*Fig. 4*

Fig. 5

14a 11

14b

11a

10 5

10

5a

1

# *Fig.6*

14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19719311
- WO 2013005161 A
- DE 202004018084